# EUROPEAN PATENT SPECIFICATION

(11) **EP 1 245 111 B1**
(45) Date of publication and mention of the grant of the patent: **14.12.2005**
(21) Application number: 01942494.4
(22) Date of filing: 08.01.2001
(51) Int. Cl.: H04N 7/00

(54) **SYSTEM AND METHOD FOR CONNECTING HOME ENTERTAINMENT AND COMPUTER DEVICES USING A LOCAL CDMA-BASED NETWORK**
SYSTEM UND VERFAHREN ZUR VERBINDUNG VON UNTERHALTUNGSGERÄTEN UNDCOMPUTERN UNTER VERWENDUNG EINES LOKALEN CDMA-BASIERTEN NETZES
SYSTEME ET PROCEDE DE CONNEXION DE DISPOSITIFS INFORMATIQUES ET AUDIOVISUELS DOMESTIQUES AU MOYEN D'UN RESEAU LOCAL AMCR

(30) Priority: 07.01.2000 US 479828
(43) Date of publication of application: 02.10.2002
(73) Proprietor: QUALCOMM INCORPORATED, San Diego, CA 92121-1714 (US)
(72) Inventor: KALHAN, Amit, San Diego, CA 92122 (US); CHAUDHRY, Mohammad, M., Portland, OR 97210 (US)
(74) Representative: Wagner & Geyer
(86) International application number: PCT/US2001/000578
(87) International publication number: WO 2001/052534

(56) References cited:
- EP-A- 0 118 145
- EP-A- 0 535 749
- EP-A- 0 930 781

## Description

### BACKGROUND OF THE INVENTION

### I. Field of the Invention

The present invention relates generally to the wireless transmission of audio, video and data signals. More particularly, the present invention relates to a local wireless network that uses code division multiple access (CDMA) modulation to connect various home entertainment devices to a central local control center, and to transmit audio, video and data signals between the control center and the various home entertainment devices.

### II. Description of the Related Art

At present, many households have a variety of home entertainment devices in their homes including multiple televisions, video cassette recorders (VCRs), personal computers, and stereo equipment such as audio tuners, compact disc recorders and stereo speakers. Each of these devices is typically connected to one or more of the other devices or to external signal sources by physical cables. For example, cable connections are typically required to connect each television to an external cable or satellite television feed, each VCR must be connected to a television by one or more cables, cables are required for delivering audio signals from an audio tuner or compact disk player to stereo speakers, and cables are typically required to connect a personal computer to an internet source in the home such as a telephone jack.

The use of such cables is often unsightly and inconvenient, and it would be desirable if connections to home entertainment devices described above could be made without resort to the physical cabling described above.

### SUMMARY OF THE INVENTION

The present invention is directed to a system and method for interconnecting a plurality of home entertainment devices using a local CDMA-based network, wherein the plurality of home entertainment devices include, for example, a first television and a first video cassette recorder (VCR). A first CDMA receiver is coupled to the first television, and a first CDMA transceiver is coupled to the first VCR. A control center includes an input port that receives a television signal from a cable or satellite source, and the control center is coupled to the first television set and the first VCR by the local CDMA-based network. The control center includes a CDMA receiver that receives signals transmitted with the first CDMA transceiver from the first VCR to the control center. The control center also includes a CDMA transmitter that transmits video signals to the first CDMA receiver coupled to the first television, and video signals to the first CDMA transceiver coupled to the first VCR. Further devices including further televisions, VCRs, a personal computer, an audio tuner, a compact disc player and audio speakers may also be coupled to the control center by the local CDMA-based network.

In one embodiment, the system also includes a second CDMA receiver coupled to a second television, a third CDMA receiver coupled to a third television, a second CDMA transceiver coupled to a second VCR, and a third CDMA transceiver coupled to a third VCR. In this embodiment, the CDMA transmitter in the control center transmits video signals to the second CDMA receiver coupled to the second television set, to the third CDMA receiver coupled to the third television set, to the second CDMA transceiver coupled to the second VCR, and to the third CDMA transceiver coupled to the third VCR. In addition, the CDMA receiver in the control center receives signals transmitted with the second CDMA transceiver from the second VCR, and signals transmitted with the third CDMA transceiver from the third VCR.

In the preferred embodiment, a separate CDMA channel (i.e., a different PN spreading code and/or offset) is used for transmitting signals from each device to the control center, and a separate CDMA channel is used for transmitting signals to each device from the control center. All the CDMA channels used for transmissions to and from the control center preferably correspond to spread spectrum signals broadcast on a common frequency band. Thus, for example, the CDMA transmitter in the control center transmits the video signals from the control center to the first television on a first CDMA channel, video signals are transmitted from the control center to the second television on a second CDMA channel, video signals are transmitted from the control center to the third television on a third CDMA channel, video signals are transmitted from the control center to the first VCR on a fourth CDMA channel, video signals are transmitted from the control center to the second VCR on a fifth CDMA channel, and video signals are transmitted from the control center to the third VCR on a sixth CDMA channel. Additionally, the first VCR transmits the video signals to the control center on a seventh CDMA channel, the second VCR transmits the video signals to the control center on an eighth CDMA channel, and the third VCR transmits the video signals to the control center on a ninth CDMA channel.

In accordance with a particularly preferred embodiment, a fourth CDMA transceiver is coupled to the first television, a fifth CDMA transceiver is coupled to the second television, and a sixth CDMA transceiver is coupled to the third television. The fourth CDMA transceiver transmits first control signals from the first television to the CDMA receiver in the control center on a tenth CDMA channel, the fifth CDMA transceiver transmits second control signals from the second television to the CDMA receiver in the control center on an eleventh CDMA channel, and the sixth CDMA transceiver transmits third control signals from the third television to the CDMA receiver in the control center on a twelfth CDMA channel. The first control signals represent a television channel selection made by a user of the first television, the second control signals represent a television channel selection made by a user of the second television, and the third control signals represent a television channel selection made by a user of the third television. Each channel selection may be made initially and sent to its respective television through the use of a remote control associated with the particular television.

In accordance with a further aspect, the network of the present invention also preferably includes a seventh CDMA transceiver coupled to a personal computer. In this embodiment, the control center further includes an input port that receives an internet signal from a remote source and transmits an internet signal to the remote source. The CDMA receiver in the control center receives internet signals transmitted with the seventh CDMA transceiver from the personal computer to the control center on a further CDMA channel, and the CDMA transmitter in the control center transmits internet signals to the seventh CDMA transceiver coupled to the personal computer on a still further CDMA channel.

The network of the present invention also optionally includes a CDMA transmitter coupled to an audio tuner, a CDMA transmitter coupled to a compact disc player, a CDMA receiver coupled to a first audio speaker, and a CDMA receiver coupled to a second audio speaker. In this embodiment, the control center is coupled to the audio tuner, the compact disc player, the first speaker and the second speaker by the local CDMA-based network, and the control center receives audio signals transmitted from the audio tuner and the compact disc player on further different CDMA channels. Additionally, the control center transmits audio signals to the first and second speakers on further different CDMA channels.

### BRIEF DESCRIPTION OF THE DRAWINGS

The features, objects and advantages of the present invention will become more apparent from the detailed description set forth below when taken in conjunction with the drawings in which like reference characters identify corresponding elements and wherein:
FIG. 1 is a block diagram of a local CDMA-based network that connects a plurality of home entertainment devices, in accordance with a preferred embodiment of the present invention.
FIG. 1A is a block diagram of a local CDMA-based network that connects a plurality of home entertainment devices, in accordance with an alternative embodiment of the present invention.
FIG. 1B is a block diagram of a local CDMA-based network that connects a plurality of home entertainment devices, in accordance with a further alternative embodiment of the present invention.
FIG. 1C is a block diagram of a local CDMA-based network that connects a plurality of home entertainment devices, in accordance with a still further alternative embodiment of the present invention.
FIG. 2 is a diagram showing the components of a control center used for routing signals between home entertainment devices in a local CDMA-based network, in accordance with a preferred embodiment of the present invention.
FIG. 2A is a diagram showing the components of a control center used for, routing signals between home entertainment devices in a local CDMA-based network, in accordance with an alternative preferred embodiment of the present invention.

### DETAILED DESCRIPTION OF THE PREFERRED EMBODIMENTS

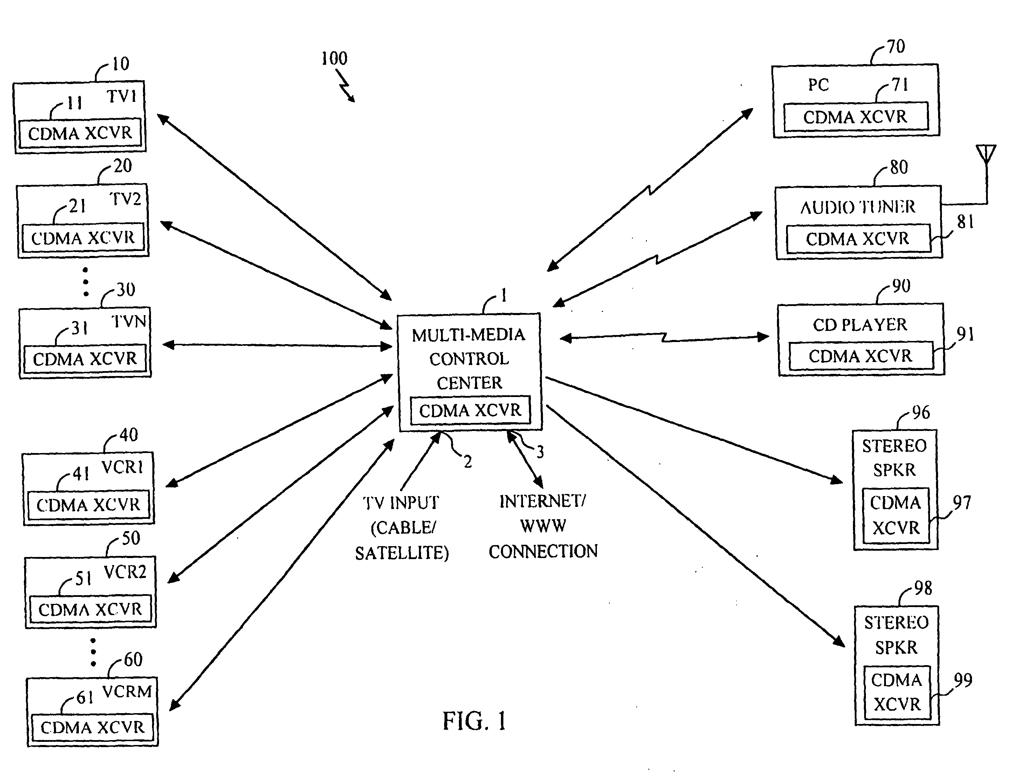

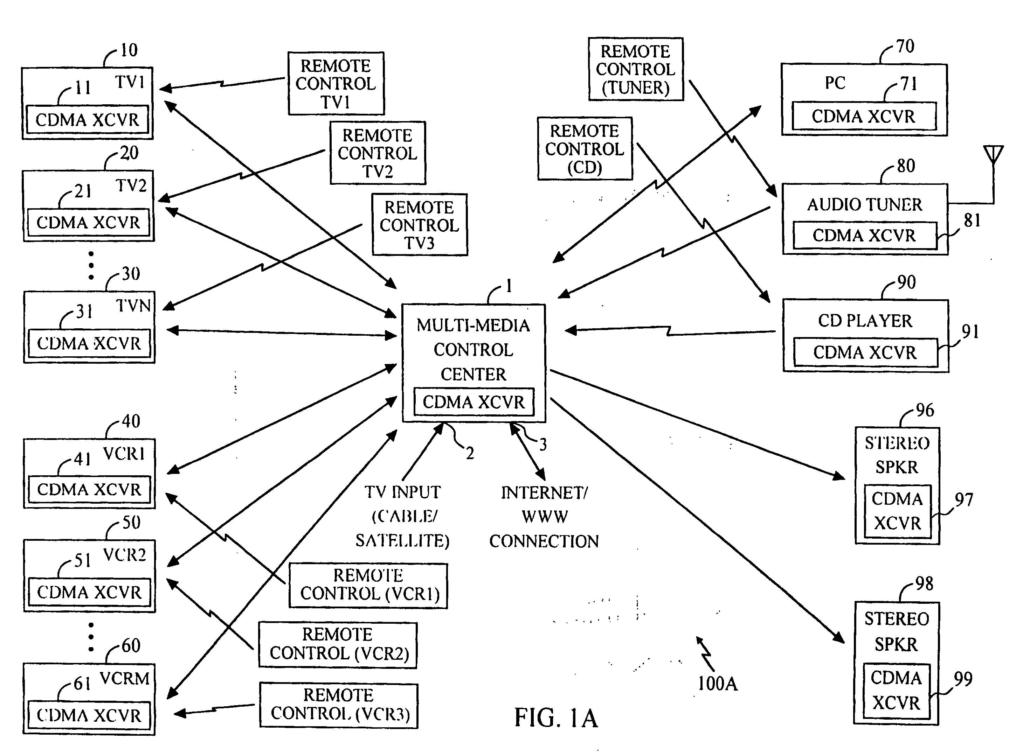

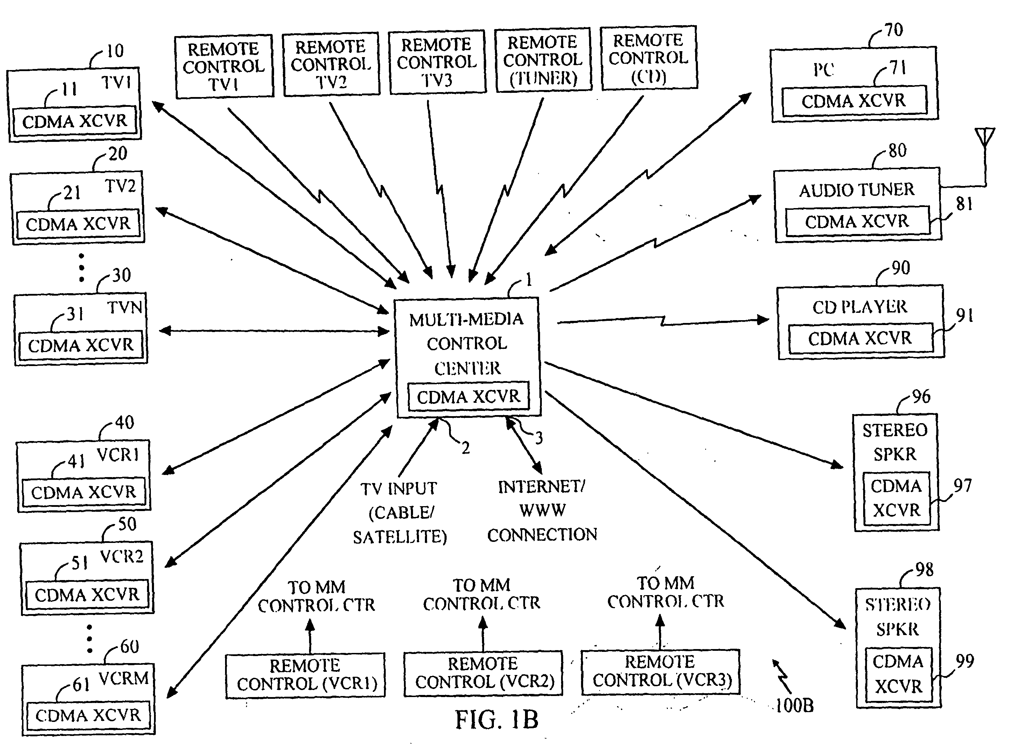

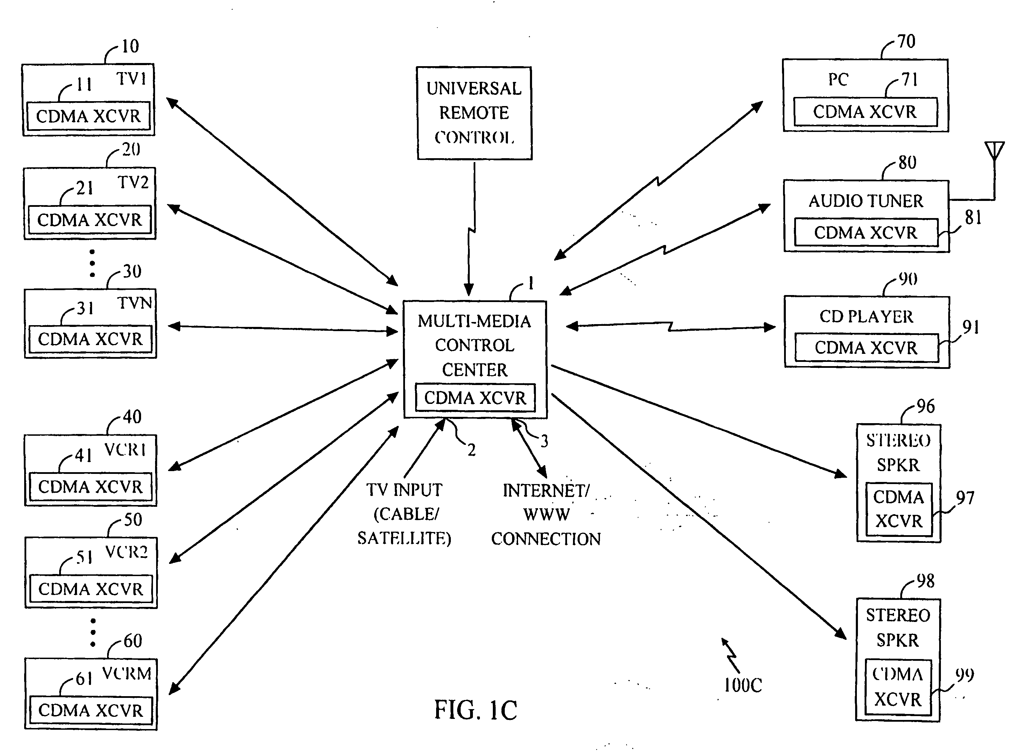

Referring now to FIG. 1, there is shown a block diagram of a local CDMA-based network 100 that connects a plurality of home entertainment devices, in accordance with a preferred embodiment of the present invention. The home entertainment devices in the network include, for example, televisions 10, 20 and 30; video cassette recorders (VCRs) 40, 50 and 60; a personal computer 70; an audio tuner 80; a compact disc player 90; and audio speakers 96 and 98. It will be understood by those skilled in the art that network 100 need not include all the devices shown in FIG. 1, and that the network may optionally include devices in addition to those shown such as, for example, DVD players. As explained more fully below, local CDMA-based network 100 provides for the coupling of the home entertainment devices described above to each other and to external signal sources, without the use of unsightly physical cables.

In addition to the home entertainment devices described above, network 100 includes a multi-media control center 1 having an input port 2 that receives a television signal from a cable or satellite source. Multi-media control center 1 also preferably includes a further input port 3 that transmits internet signals to and from control center 1. During using of the internet by personal computer 70, port 3 is coupled preferably coupled to an internet service provider via a telephone or cable modem (not shown). As discussed more fully below, each home entertainment device in the network is coupled to multi-media control center 1 by one or more CDMA channels. In the preferred embodiment, a separate CDMA channel (i.e., a different PN spreading code and/or offset) is used for transmitting signals from each home entertainment device in the network to control center 1, and a separate CDMA channel is used for transmitting signals to each device from the control center 1. All the CDMA channels used for transmissions to and from the control center preferably correspond to spread spectrum signals broadcast on a common frequency band. Alternatively, all the CDMA channels used for transmissions to the control center preferably correspond to spread spectrum signals broadcast on a first frequency band, and all the CDMA channels used for transmissions from the control center preferably correspond to spread spectrum signals broadcast on a second (different) frequency band.

A CDMA transceiver 11 is coupled to television 10 (TV1). Among other functions, CDMA transceiver 11 transmits channel selection control signals from television 10 (TV1) to control center 1 on a particular CDMA channel, and CDMA transceiver 11 receives video signals transmitted to television 10 (TV1) from control center 1 on a further CDMA channel. CDMA transceivers are known in the art. Components for a suitable CDMA transceiver that may be used for implementing the transceivers used in network 100 are shown in U.S. Patent No. 5,101,501 entitled "Method and Apparatus for Providing A Soft Handoff In Communications In A CDMA Cellular Telephone System", which is assigned to the assignee of the present invention. A further CDMA transceiver 21 is coupled to television 20 (TV2), and a further CDMA transceiver 31 is coupled to television 30 (TVn). CDMA transceiver 21 transmits channel selection control signals transmitted from television 20 (TV2) to control center 1 on a particular CDMA channel, and CDMA transceiver 21 receives video signals transmitted to television 20 (TV2) from control center 1 on a further CDMA channel. Similarly, CDMA transceiver 31 transmits channel selection control signals transmitted from television 30 (TVn) to control center 1 on a particular CDMA channel, and CDMA transceiver 31 receives video signals transmitted to television 30 (TVn) from control center 1 on a still further CDMA channel. Each of the channel selection control signals sent by televisions 10, 20, 30 corresponds to a channel that a user of a given television desires to view. As shown in FIG. 1A, channel selection control signals may be generated at a given television in response to actuation by a user of a remote control associated with the given television.

A CDMA transceiver 41 is coupled to VCR 40 (VCR1). Among other functions, CDMA transceiver 41 receives video signals transmitted to VCR 40 (VCR1) from control center 1 on a particular CDMA channel, and CDMA transceiver 41 transmits video signals from VCR 40 (VCR1) to control center 1 on a further CDMA channel. A further CDMA transceiver 51 is coupled to VCR 50 (VCR2). CDMA transceiver 51 receives video signals transmitted to VCR 50 (VCR2) from control center 1 on a particular CDMA channel, and CDMA transceiver 51 transmits video signals from VCR 50 (VCR2) to control center 1 on a further CDMA channel. A still further CDMA transceiver 61 is coupled to VCR 60 (VCRn). CDMA transceiver 61 receives video signals transmitted to VCR 60 (VCRn) from control center 1 on a particular CDMA channel, and CDMA transceiver 61 transmits video signals from VCR 60 (VCRn) to control center 1 on a further CDMA channel. CDMA transceiver 41 also optionally transmits channel selection control signals from VCR 40 to control center 1 on a particular CDMA channel, CDMA transceiver 51 transmits channel selection control signals from VCR 50 to control center 1 on a further CDMA channel, and CDMA transceiver 61 transmits channel selection control signals from VCR 60 to control center 1 on a still further CDMA channel. Each of the channel selection control signals sent by VCRs 40, 50, 60 corresponds to a channel that a user of a given VCR desires to record. As shown in FIG. 1A, channel selection control signals may be generated at a given VCR in response to actuation by a user of a remote control associated with the given VCR.

Referring again to FIG. 1, network 100 also optionally includes a personal computer 70. A CDMA transceiver 71 is coupled to the personal computer. CDMA transceiver 71 receives internet signals transmitted to personal computer 70 from control center 1 on a particular CDMA channel, and CDMA transceiver 71 transmits internet signals from personal computer 70 to control center 1 on a further CDMA channel.

Referring still to FIG. 1, an audio tuner 80 is also optionally included in network 100. A CDMA transceiver 81 is coupled to the audio tuner 80. CDMA transceiver 81 transmits audio signals from audio tuner 80 to control center 1 on a further CDMA channel. The audio channel tuned using audio tuner 80 may be selected by a user with a remote control that transmits signals directly to audio tuner 80 (as shown in FIG. 1A), or with a remote a control (such as that shown in FIGS. 1B, 1C) that first transmits a channel selection signal from the remote control to control center 1. In this latter embodiment, transceiver 81 also functions to receive channel selection signals (that represent a channel selected by a user via remote control) from control center 1 on a further CDMA channel.

A compact disk player 90 is also optionally included in network 100. A CDMA transceiver 91 is coupled to the compact disk player 90. CDMA transceiver 91 transmits audio signals from compact disk player 90 to control center 1 on a further CDMA channel. The compact disk number and/or track played by player 90 may be selected by a user with a remote control that transmits control signals directly to compact disk player 90 (as shown in FIG. 1A), or with a remote a control (such as that shown in FIGS. 1B, 1C) that transmits a disk number and/or track selection signal directly from the remote control to control center 1. In this latter embodiment, transceiver 91 also functions to receive the disk number and/or track selection signals (that represent a disk number and/or track selected by a user via remote control) from control center 1 on a further CDMA channel.

Finally, network 100 also optionally includes audio speakers 96 and 98, which are respectively coupled to CDMA receivers 97 and 99. Each CDMA receiver 97, 99 receives audio signals from control center 1 on a further separate CDMA channel, and the received audio signals are provided to speakers 96, 98. The audio signals received by receivers 96, 98 correspond, for example, to audio signals that were first generated at tuner 80 or compact disk player 90, transmitted therefrom to control center 1 on a CDMA channel, and then routed on a further CDMA channel from control center 1 back to speakers 96, 98.

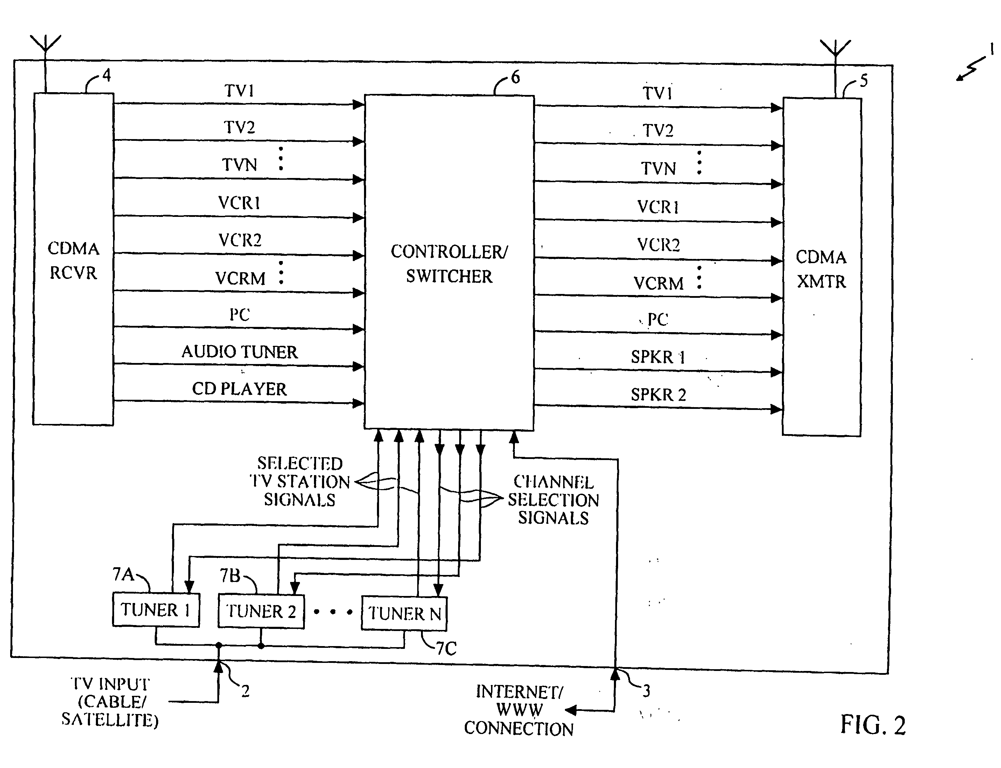

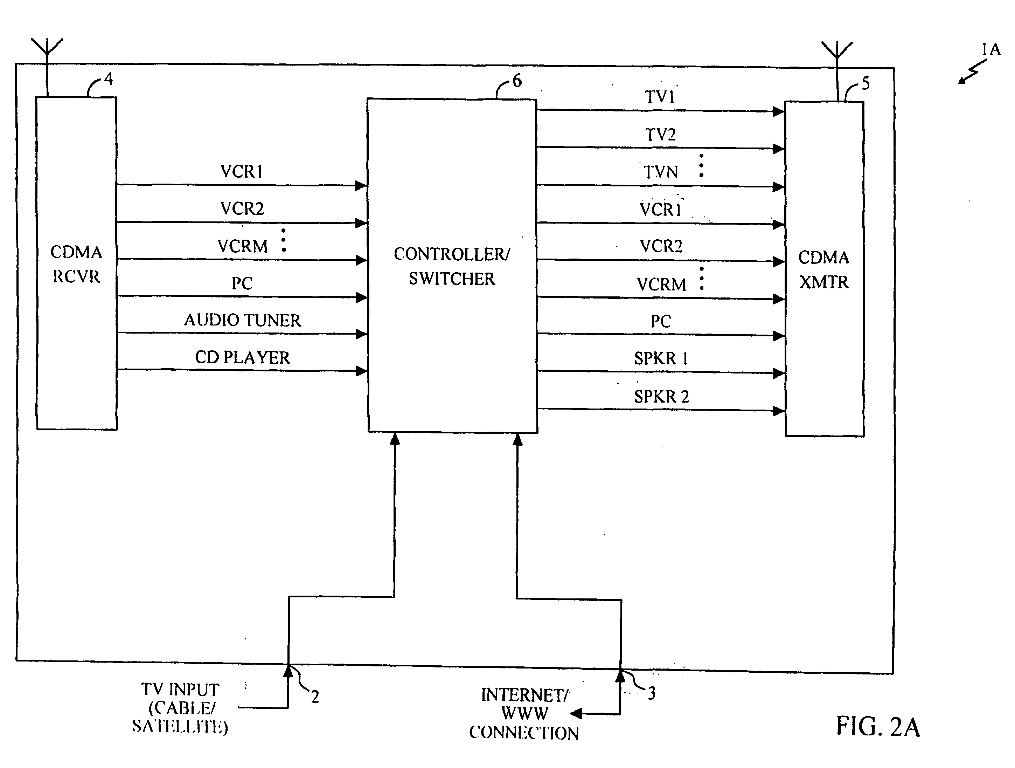

Referring now to FIG. 2, there is shown a diagram illustrating the components of control center 1 used for routing signals to and among the home entertainment devices in local CDMA-based network 100, in accordance with a preferred embodiment of the present invention. Control center 100 includes an input port 2 that receives a television signal from a cable or satellite source, and a further input port 3 that transmits internet signals to and from control center 1. The control center includes a CDMA receiver 4 that receives: (i) the channel selection signals described above from televisions 10, 20 and 30, (ii) the video and/or channel selection signals described above from VCRs 40, 50 and 60, (iii) the internet signals described above from personal computer 70, (iv) and the audio signals described above from audio tuner 80 and compact disk player 90. CDMA receiver 4 then provides each of these received signals to controller/switcher 6. The internet signals received on receiver 4 are provided via switcher/controller 6 to port 3 and internet signals from port 3 are also provided to switcher/controller 6 for transmission via CDMA transmitter 5 to personal computer 70. Switcher/controller 6 includes software for routing signals input to the switcher (from receiver 4 or tuners 7a, 7b, 7c) to either transmitter 5 or tuners 7a, 7b, 7c.

Control center 1 also preferably includes a plurality of television tuners 7a, 7b, 7c, each of which is associated with one of the televisions or VCRs in the network. Each of the tuners 7a, 7b, 7c is also coupled to port 2 and receives the television signal from the cable or satellite feed described above. In the preferred embodiment, the channel selection signal received from each television or VCR described above is provided to its respective tuner, which, in response to the channel selection signal, adjusts its tuning circuitry to the television channel corresponding to the channel selection signal. A television signal representative of the tuned channel from each tuner 7a, 7b, 7c is then provided back to switcher/controller 6.

Switcher/controller 6 outputs to CDMA transmitter 5 (i) television signals from tuners 7a, 7b, 7c which are then transmitted by transmitter 5 to televisions 10, 20, 30 and VCRs 40, 50, 60 using the CDMA signals described above, (ii) television signals generated from VCRs 40, 50, 60 (during, for example, playback of a tape) which are then transmitted by transmitter 5 to televisions 10, 20, 30 using the CDMA signals described above, (iii) internet signals from port 3 which are then transmitted by transmitter 5 to personal computer 70 using the CDMA signals described above, and (iv) audio signals from audio tuner 80 and/or compact disk player 90 which are then transmitted by transmitter 5 to speakers 96, 98 using the CDMA signals described above.

Referring now to FIG. 2A, there is a diagram showing the components of a control center 1a used for routing signals between home entertainment devices in a local CDMA-based network, in accordance with an alternative preferred embodiment of the present invention. In contrast to control' center 1, in the embodiment shown in FIG. 2A the tuning of televisions stations occurs at televisions 10, 20, 30, and VCRs 40, 50, 60, rather than in television tuners disposed within the control center. In this embodiment, no channel selection signals are transmitted from the televisions 20, 20 , 30 and VCRs 40, 50, 60 to control center 1, and the television signals sent from control center 1 to television 10, 20, 30 and VCR 40, 50, 60 each correspond to the entire spectrum of stations received in port 2.

Referring now to FIGS. 1B and 1C, there are shown block diagrams of local CDMA-based networks 100b, 100c that connect a plurality of home entertainment devices, in accordance with further alternative embodiments of the present invention. In network 100b, the channel selection control signals associated with televisions 10, 20, 30, VCRs 40, 50, 60 and audio tuner 80 are each transmitted from a separate remote control associated with each of the devices to control center 1, and the disk selection/track selection signals associated with compact disk player 90 are transmitted by a remote control associated with compact disk player 90 to control center 1. In network 100c, the channel selection control signals associated with televisions 10, 20, 30, VCRs 40, 50, 60 and audio tuner 80 and the disk selection/track selection signals associated with compact disk player 90 are each transmitted from a single universal remote control that communicates with all of the devices to control center 1.

The previous description of the preferred embodiments is provided to enable any person skilled in the art to make or use the present invention. Various modifications to the embodiments described above will be readily apparent to those skilled in the art, and the generic principles defined herein may be applied to other embodiments without the use of inventive faculty. Thus, the present invention is not intended to be limited to the methods and apparatuses shown herein but is to be defined by the claims set forth below.

## Claims

1. A system for interconnecting a plurality of home entertainment devices using a local CDMA-based network, wherein the plurality of home entertainment devices include a first television and a first video cassette recorder (VCR), comprising:
a first CDMA receiver coupled to the first television;
a first CDMA transceiver coupled to the first VCR;
a control center includes an input port that receives a television signal from a cable or satellite source, wherein the control center is coupled to the first television set and the first VCR by the local CDMA-based network;
wherein the control center includes a CDMA receiver that receives signals transmitted with the first CDMA transceiver from the first VCR to the control center; and
wherein the control center includes a CDMA transmitter that transmits video signals to the first CDMA receiver coupled to the first television, and video signals to the first CDMA transceiver coupled to the first VCR.

2. The system of claim 1, further comprising:
a second CDMA receiver coupled to a second television;
wherein the control center is coupled to the second television by the local CDMA-based network, and the CDMA transmitter in the control center transmits video signals to the second CDMA receiver coupled to the second television set.

3. The system of claim 2, further comprising:
a third CDMA receiver coupled to a third television;
wherein the control center is coupled to the third television by the local CDMA-based network, and the CDMA transmitter in the control center transmits video signals to the third CDMA receiver coupled to the third television set.

4. The system of claim 3, further comprising:
a second CDMA transceiver coupled to a second VCR;
wherein the control center is coupled to the second VCR by the local CDMA-based network, the CDMA receiver in the control center receives signals transmitted with the second CDMA transceiver from the second VCR to the control center, and the CDMA transmitter in the control center transmits video signals to the second CDMA transceiver coupled to the second VCR.

5. The system of claim 4, further comprising:
a third CDMA transceiver coupled to a third VCR;
wherein the control center is coupled to the third VCR by the local CDMA-based network, the CDMA receiver in the control center receives signals transmitted with the third CDMA transceiver from the third VCR to the control center, and the CDMA transmitter in the control center transmits video signals to the third CDMA transceiver coupled to the third VCR.

6. The system of claim 5, wherein the CDMA transmitter in the control center transmits the video signals from the control center to the first CDMA receiver coupled to the first television on a first CDMA channel, the CDMA transmitter in the control center transmits the video signals from the control center to the second CDMA receiver coupled to the second television on a second CDMA channel, and the CDMA transmitter in the control center transmits the video signals from the control center to the third CDMA receiver coupled to the third television on a third CDMA channel.

7. The system of claim 6, wherein the CDMA transmitter in the control center transmits the video signals from the control center to the first CDMA transceiver coupled to the first VCR on a fourth CDMA channel, the CDMA transmitter in the control center transmits the video signals from the control center to the second CDMA transceiver coupled to the second VCR on a fifth CDMA channel, and the CDMA transmitter in the control center transmits the video signals from the control center to the third CDMA transceiver coupled to the third VCR on a sixth CDMA channel.

8. The system of claim 7, wherein the first CDMA transceiver coupled to the first VCR transmits the video signals to the CDMA receiver in the control center on a seventh CDMA channel, the second CDMA transceiver coupled to the second VCR transmits the video signals to the CDMA receiver in the control center on an eighth CDMA channel, and the third CDMA transceiver coupled to the third VCR transmits the video signals to the CDMA receiver in the control center on a ninth CDMA channel.

9. The system of claim 8, further comprising:
a fourth CDMA transceiver coupled to the first television, wherein said fourth CDMA transceiver includes the first CDMA receiver coupled to the first television;
a fifth CDMA transceiver coupled to the second television, wherein said fifth CDMA transceiver includes the second CDMA receiver coupled to the second television; and
a sixth CDMA transceiver coupled to the third television, wherein said sixth CDMA transceiver includes the third CDMA receiver coupled to the third television.

10. The system of claim 9, wherein the fourth CDMA transceiver coupled to the first television transmits first control signals to the CDMA receiver in the control center on a tenth CDMA channel, the fifth CDMA transceiver coupled to the second television transmits second control signals to the CDMA receiver in the control center on an eleventh CDMA channel, and the sixth CDMA transceiver coupled to the third television transmits third control signals to the CDMA receiver in the control center on a twelfth CDMA channel.

11. The system of claim 10, wherein the first control signals represent a television channel selection made by a user of the first television, the second control signals represent a television channel selection made by a user of the second television, and the third control signals represent a television channel selection made by a user of the third television.

12. The system of claim 11, wherein the control center further includes:
a first tuner, responsive to the first control signals, that receives the television signal from the cable or satellite source and selects therefrom a single television station;
a second tuner, responsive to the second control signals, that receives the television signal from the cable or satellite source and selects therefrom a single television station;
a third tuner, responsive to the third control signals, that receives the television signal from the cable or satellite source arid selects therefrom a single television station;
wherein, in response to the first control signals, the CDMA transmitter in the control center transmits video signals representative of the television station selected by the first tuner to the fourth CDMA transceiver coupled to the first television set on the first CDMA channel;
wherein, in response to the second control signals, the CDMA transmitter in the control center transmits video signals representative of the television station selected by the second tuner to the fifth CDMA transceiver coupled to the second television set on the second CDMA channel; and
wherein, in response to the third control signals, the CDMA transmitter in the control center transmits video signals representative of the television station selected by the third tuner to the sixth CDMA transceiver coupled to the third television set on the third CDMA channel.

13. The system of claim 12, wherein the first CDMA transceiver coupled to the first VCR transmits fourth control signals to the CDMA receiver in the control center on a thirteenth CDMA channel, the second CDMA transceiver coupled to the second VCR transmits fifth control signals to the CDMA receiver in the control center on a fourteenth CDMA channel, and the third CDMA transceiver coupled to the third VCR transmits sixth control signals to the CDMA receiver in the control center on a fifthteenth CDMA channel.

14. The system of claim 13, wherein the fourth control signals represent a television channel recording selection made by a user of the first VCR, the fifth control signals represent a television channel recording selection made by a user of the second VCR, and the sixth control signals represent a television channel recording selection made by a user of the third VCR.

15. The system of claim 14, wherein:
the first tuner is further responsive to the fourth control signals;
the second tuner is further responsive to the fifth control signals;
the third tuner is further responsive to the sixth control signals; and
wherein, in response to the fourth control signals, the CDMA transmitter in the control center transmits video signals representative of the television station selected by the first tuner to the first CDMA transceiver coupled to the first VCR on the fourth CDMA channel;
wherein, in response to the fifth control signals, the CDMA transmitter in the control center transmits video signals representative of the television station selected by the second tuner to the second CDMA transceiver coupled to the second VCR on the fifth CDMA channel; and
wherein, in response to the sixth control signals, the CDMA transmitter in the control center transmits video signals representative of the television station selected by the third tuner to the third CDMA transceiver coupled to the third VCR on the sixth CDMA channel.

16. The system of claim 15, further comprising:
a seventh CDMA transceiver coupled to a personal computer;
wherein the control center further includes an input port that receives an internet signal from a remote source and transmits an internet signal to the remote source;
wherein the control center is coupled to the personal computer by the local CDMA-based network; and
wherein the CDMA receiver in the control center receives internet signals transmitted with the seventh CDMA transceiver from the personal computer to the control center on a sixteenth CDMA channel, and the CDMA transmitter in the control center transmits internet signals to the seventh CDMA transceiver coupled to the personal computer on a seventeenth CDMA channel.

17. The system of claim 16, further comprising:
a CDMA transmitter coupled to an audio tuner;
a CDMA transmitter coupled to a compact disc player;
a CDMA receiver coupled to a first audio speaker; and
a CDMA receiver coupled to a second audio speaker;
wherein the control center is coupled to the audio tuner, the compact disc player, the first speaker and the second speaker by the local CDMA-based network;
wherein the CDMA receiver in the control center receives audio signals transmitted from the audio tuner to the control center on a eighteenth CDMA channel, the CDMA receiver in the control center receives audio signals transmitted from the compact disc player to the control center on a nineteenth CDMA channel; and
wherein the CDMA transmitter in the control center transmits audio signals to the first speaker on a twentieth CDMA channel, and the CDMA transmitter in the control center transmits audio signals to the second speaker on a twenty-first CDMA channel.

18. A method for interconnecting a plurality of home entertainment devices using a local CDMA-based network, wherein the plurality of home entertainment devices include a first television and a first video cassette recorder (VCR), comprising the steps of:
providing a first CDMA receiver coupled to the first television;
providing a first CDMA transceiver coupled to the first VCR;
providing a control center includes an input port that receives a television signal from a cable or satellite source, wherein the control center is coupled to the first television set and the first VCR by the local CDMA-based network;
receiving, with a CDMA receiver at the control center, signals transmitted with the first CDMA transceiver from the first VCR to the control center;
transmitting, with a CDMA transmitter at the control center, video signals to the first CDMA receiver coupled to the first television; and
transmitting, with the CDMA transmitter at the control center, video signals to the first CDMA transceiver coupled to the first VCR.

## Patentansprüche

1. Ein System zum untereinander Verbinden einer Vielzahl von Homeentertainment-Geräten unter Verwendung eines lokalen CDMA-basiertem Netzwerks, wobei die Vielzahl von Homeentertainment-Geräten ein erstes Fernsehgerät und einen ersten Videorekorder (VCR = Videocassettrecorder) enthalten, wobei das System Folgendes aufweist:
einen ersten CDMA-Empfänger, der an das erste Fernsehgerät gekoppelt ist;
einen zweiten CDMA-Transceiver, der an den ersten VCR gekoppelt ist; eine Steuerzentrale, die einen Eingabeanschluss beinhaltet, der ein Fernsehsignal von einer Kabel- oder Satellitenquelle empfängt, wobei die Steuerzentrale an das erste Fernsehgerät und den ersten VCR mittels des lokalen CDMA-basierten Netzwerkes gekoppelt ist;
wobei die Steuerzentrale einen CDMA-Empfänger beinhaltet, der Signale empfängt, die mit dem ersten CDMA-Transceiver von dem ersten VCR zu der Steuerzentrale gesendet werden; und
wobei die Steuerzentrale einen CDMA-Sender enthält, das Videosignale an den ersten CDMA-Empfänger gekoppelt an das erste Fernsehgerät sendet, und Videosignale an den ersten CDMA-Transceiver, der an den ersten VCR gekoppelt ist, sendet.

2. System nach Anspruch 1, das weiterhin Folgendes aufweist:
einen zweiten CDMA-Empfänger, der an ein zweites Fernsehgerät gekoppelt ist;
wobei die Steuerzentrale an das zweite Fernsehgerät durch das lokale CDMA-basierte Netzwerk gekoppelt ist, und der CDMA-Sender in der Steuerzentrale Videosignale an den zweiten CDMA-Empfänger, der an das zweite Fernsehgerät gekoppelt ist, sendet.

3. System nach Anspruch 2, das weiterhin Folgendes aufweist:
einen dritten CDMA-Empfänger, der an ein drittes Fernsehgerät gekoppelt ist;
wobei die Steuerzentrale an das dritte Fernsehgerät durch das lokale CDMA-basierte Netzwerk gekoppelt ist, und der CDMA-Sender in der Steuerzentrale Videosignale an den dritten CDMA-Empfänger gekoppelt an das dritte Fernsehgerät sendet.

4. System nach Anspruch 3, das weiterhin Folgendes aufweist:
einen zweiten CDMA-Transceiver, der an ein zweites VCR gekoppelt ist;
wobei die Steuerzentrale an das zweite VCR durch das lokale CDMA-basierte Netzwerk gekoppelt ist, wobei der CDMA-Empfänger in der Steuerzentrale Signale empfängt, die von dem zweiten CDMA-Transceiver von dem zweiten VCR an die Steuerzentrale gesendet werden, und der CDMA-Sender in der Steuerzentrale Videosignale an den zweiten CDMA-Transceiver, der an den zweiten VCR gekoppelt ist, sendet.

5. System nach Anspruch 4, das weiterhin Folgendes aufweist:
einen dritten CDMA-Transceiver, der an einen dritten VCR gekoppelt ist;
wobei die Steuerzentrale an den dritten VCR durch das lokale CDMA-basierte Netzwerk gekoppelt ist, wobei der CDMA-Empfänger in der Steuerzentrale Signale empfängt, die von dem dritten CDMA-Transceiver von dem dritten VCR an die Steuerzentrale gesendet werden, und der CDMA-Sender in der Steuerzentrale Videosignale an den dritten CDMA-Transceiver, der an den dritten VCR gekoppelt ist, sendet.

6. System nach Anspruch 5, wobei der CDMA-Sender in der Steuerzentrale die Videosignale von der Steuerzentrale an den ersten CMDA-Empfänger sendet, der an das erste Fernsehgerät auf einem ersten CDMA-Kanal gekoppelt ist, wobei der CDMA-Sender in der Steuerzentrale die Videosignale von der Steuerzentrale an den zweiten CDMA-Empfänger, der an das zweite Fernsehgerät gekoppelt ist, auf einem zweiten CDMA-Kanal sendet, und der CDMA-Sender in der Steuerzentrale die Videosignale von der Steuerzentrale an den dritten CDMA-Empfänger, der an das dritte Fernsehgerät gekoppelt ist, auf einem dritten CDMA-Kanal sendet.

7. System nach Anspruch 6, wobei der CDMA-Sender in der Steuerzentrale die Videosignale von der Steuerzentrale an den ersten CDMA-Transceiver, der an den ersten VCR gekoppelt ist, auf einem vierten CDMA-Kanal sendet, wobei der CDMA-Sender in der Steuerzentrale die Videosignale von der Steuerzentrale an den zweiten CDMA-Transceiver, der an den zweiten VCR gekoppelt ist, auf einem fünften CDMA-Kanal sendet, und wobei der CDMA-Sender in der Steuerzentrale die Videosignale von der Steuerzentrale an den dritten CDMA-Transceiver, der an den dritten VCR gekoppelt ist, auf einem sechsten CDMA-Kanal sendet.

8. System nach Anspruch 7, wobei der erste CDMA-Transceiver, der an den ersten VCR gekoppelt ist, die Videosignale zu dem CDMA-Empfänger in der Steuerzentrale auf einem siebten CDMA-Kanal sendet, wobei der zweite CDMA-Transceiver, der an den zweiten VCR gekoppelt ist, die Videosignale an den CDMA-Empfänger in der Steuerzentrale auf einem achten CDMA-Kanal sendet, und wobei der dritte CDMA-Transceiver, der an den dritten VCR gekoppelt ist, die Videosignale auf dem CDMA-Empfänger in der Steuerzentrale auf einem neunten CDMA-Kanal sendet.

9. System nach Anspruch 8, das weiterhin Folgendes aufweist:
einen vierten CDMA-Transceiver, der an ein erstes Fernsehgerät gekoppelt ist, wobei der vierte CDMA-Transceiver den ersten CDMA-Empfänger gekoppelt an das erste Fernsehgerät enthält;
einen fünften CDMA-Transceiver, der an das zweite Fernsehgerät gekoppelt ist, wobei der fünfte CDMA-Transceiver den zweiten CDMA-Empfänger gekoppelt an das zweite Fernsehgerät enthält; und
einen sechsten CDMA-Transceiver, der an das dritte Fernsehgerät gekoppelt ist, wobei der sechste CDMA-Transceiver den dritten CDMA-Empfänger gekoppelt an das dritte Fernsehgerät enthält.

10. System nach Anspruch 9, wobei der vierte CDMA-Transceiver, der an das erste Fernsehgerät gekoppelt ist, erste Steuersignale an den CDMA-Empfänger in der Steuerzentrale auf einem zehnten CDMA-Kanal sendet, wobei der fünfte CDMA-Transceiver, der an das zweite Fernsehgerät gekoppelt ist, zweite Steuersignale an den CDMA-Empfänger in der Steuerzentrale auf einem elften CDMA-Kanal sendet und der sechste CDMA-Transceiver, der an das dritte Fernsehgerät gekoppelt ist, dritte Steuersignale an den CDMA-Empfänger in der Steuerzentrale auf einem zwölften CDMA-Kanal sendet.

11. System nach Anspruch 10, wobei die ersten Steuersignale eine Fernsehkanalauswahl, ausgeführt durch den Benutzer des ersten Fernsehgeräts, darstellen, wobei dies zweiten Steuersignale eine Fernsehkanalauswahl, ausgewählt durch einen Benutzer des zweiten Fernsehgeräts, darstellen, und die dritten Steuersignale einer Fernsehkanalauswahl, ausgeführt durch einen Benutzer des dritten Fernsehgeräts, darstellen.

12. System nach Anspruch 11, wobei die Steuerzentrale weiterhin Folgendes beinhaltet:
einen ersten Tuner, ansprechend auf die ersten Steuersignale, wobei der Tuner das Fernsehsignal von der Kabel- oder Satellitenquelle empfängt und hieraus eine einzelne Fernsehstation auswählt;
einen zweiten Tuner, ansprechend auf die zweiten Steuersignale, wobei der Tuner das Fernsehsignal von der Kabel- oder Satellitenquelle empfängt und hieraus eine einzelne Fernsehstation auswählt;
einen dritten Tuner, ansprechend auf die dritten Steuersignale, der das Fernsehsignal von der Kabel- oder Satellitenquelle empfängt und hieraus eine einzelne Fernsehstation auswählt;
wobei, ansprechend auf die ersten Steuersignale, der CDMA-Sender in der Steuerzentrale, Videosignale repräsentativ für die Fernsehstation, die von dem ersten Tuner ausgewählt wurde, an den vierten CDMA-Transceiver, der an das erste Fernsehgerät gekoppelt ist, auf dem ersten CDMA-Kanal sendet;
wobei, ansprechend auf die zweiten Steuersignale, der CDMA-Sender in der Steuerzentrale Videosignale repräsentativ für die Fernsehstation, die von dem zweiten Tuner ausgewählt wurde an dem fünften CDMA-Transceiver, der an das zweite Fernsehgerät gekoppelt ist, auf dem zweiten CDMA-Kanal sendet; und
wobei, ansprechend auf die dritten Steuersignale der CDMA-Sender in der Steuerzentrale Videosignale repräsentativ für die Fernsehstation, ausgewählt durch den dritten Tuner, an den sechsten CDMA-Transceiver, der an das dritte Fernsehgerät gekoppelt ist, auf dem dritten CDMA-Kanal sendet.

13. System nach Anspruch 12, wobei der erste CDMA-Transceiver, der an den ersten VCR gekoppelt ist, vierte Steuersignale an den CDMA-Empfänger in der Steuerzentrale auf einem dreizehnten CDMA-Kanal sendet, wobei der zweite CDMA-Transceiver, der an den zweiten VCR gekoppelt ist, fünfte Steuersignale an dem CDMA-Empfänger in der Steuerzentrale auf einem vierzehnten CDMA-Kanal sendet, und wobei der dritte CDMA-Transceiver, der an den dritten VCR gekoppelt ist, sechste Steuersignale an den CDMA-Empfänger in der Steuerzentrale auf einem fünfzehnten CDMA-Kanal sendet.

14. System nach Anspruch 13, wobei die vierten Steuersignale eine vierte Fernsehkanalaufzeichnungsauswahl, ausgeführt durch einen Benutzer des ersten VCRs, darstellt, wobei die fünften Steuersignale Fernsehkanalaufzeichnungsauswahl, ausgeführt durch einen Benutzer des zweiten VCRs darstellen, und die sechsten Steuersignale eine Fernsehkanalaufzeichnungsauswahl, ausgeführt durch einen Benutzer des dritten VCRs darstellen.

15. System nach Anspruch 14, wobei:
der erste Tuner weiterhin auf die vierten Steuersignale anspricht;
der zweite Tuner weiterhin auf die fünften Steuersignale anspricht;
der dritte Tuner weiterhin auf die sechsten Steuersignale anspricht; und
wobei, ansprechend auf die vierten Steuersignale, der CDMA-Sender in der Steuerzentrale Videosignale repräsentativ für die Fernsehstationsauswahl (ausgeführt durch den ersten Tuner), an den ersten CDMA-Transceiver, der an den ersten VCR gekoppelt ist, auf dem vierten CDMA-Kanal sendet;
wobei, ansprechend auf die fünften Steuersignale, der CDMA-Sender in der Steuerzentrale Videosignale repräsentativ für die Fernsehstation, ausgewählt durch den zweiten Tuner, an den zweiten CDMA-Transceiver, der an dem zweiten VCR gekoppelt ist, auf dem fünften CDMA-Kanal sendet; und
wobei ansprechend auf die sechsten Steuersignale der CDMA-Sender in der Steuerzentrale Videosignale die repräsentativ sind für die Fernsehstation, die durch den dritten Tuner ausgewählt wurde, an den dritten CDMA-Transceiver, der an den dritten VCR gekoppelt ist, auf dem sechsten CDMA-Kanal sendet.

16. System nach Anspruch 15, der weiterhin Folgendes aufweist:
einen siebten CDMA-Transceiver, der an einen PC (PC = Personal Computer) gekoppelt ist;
wobei die Steuerzentrale weiterhin einen Eingabeanschluß beinhaltet, der ein Internetsignal von einer entfernten Quelle empfängt und ein Internetsignal an die entfernte Quelle sendet;
wobei die Steuerzentrale an den PC durch das lokale CDMA-basierte Netzwerk gekoppelt ist; und
wobei der CDMA-Empfänger in der Steuerzentrale Internetsignale empfängt, die von dem siebten CDMÄ-Transceiver von dem PC zu der Steuerzentrale auf einem sechzehnten CMDA-Kanal gesendet werden, und wobei der CDMA-Sender in der Steuerzentrale Internetsignale an den siebten CDMA-Transceiver, der an den PC gekoppelt ist, auf einem siebzehnten CDMA-Kanal sendet.

17. System nach Anspruch 16, der weiterhin Folgendes aufweist:
einen CDMA-Sender, der an einen Audio-Tuner gekoppelt ist;
einen CDMA-Sender, der an einen CD-Spieler gekoppelt ist;
einen CDMA-Empfänger, der an einen ersten Lautsprecher gekoppelt ist; und
einen CDMA-Empfänger, der an einen zweiten Lautsprecher gekoppelt ist; und
einen CDMA-Empfänger, der an einem zweiten Lautsprecher gekoppelt ist;
wobei die Steuerzentrale an den Audio-Tuner, den CD-Spieler, den ersten Lautsprecher und den zweiten Lautssprecher durch das lokale CDMA-basierte Netzwerk gekoppelt ist;
wobei der CDMA-Empfänger in der Steuerzentrale Audiosignale empfängt, die von dem Audio-Tuner an die Steuerzentrale auf einem achtzehnten CDMA-Kanal gesendet werden, wobei der CDMA-Empfänger in der Steuerzentrale Audio-Signale, die von dem CD-Spieler an die Steuerzentrale auf einem neunzehnten CDMA-Kanal gesendet werden, empfängt; und
wobei der CDMA-Sender in der Steuerzentrale Audio-Signale an den ersten Lautsprecher auf einem zwanzigsten CDMA-Kanal sendet und der CDMA-Sender in der Steuerzentrale Audio-Signal an den zweiten Lautsprecher auf einem einundzwanzigsten CDMA-Kanal sendet.

18. Ein Verfahren zum Verbinden einer Vielzahl von Homeentertainment- bzw. Unterhaltungsgeräten unter Verwendung eines lokalen CDMA-basierten Netzwerks, wobei die Vielzahl von Homeentertainment-Geräten ein erstes Fernsehgerät und einen Videorekorder (VCR = Videocassettrecorder) beinhalten, wobei das Verfahren die folgenden Schritte aufweist:
Vorsehen eines ersten CDMA-Empfängers, der an das erste Fernsehgerät gekoppelt ist;
Vorsehen eines ersten CDMA-Transceivers, der an den ersten VCR gekoppelt ist;
Vorsehen einer Steuerzentrale, die einen Eingangsanschluss bzw. - port besitzt, der ein Fernsehsignal von einer Kabel- oder Satellitenquelle empfängt, wobei die Steuerzentrale an das erste Fernsehgerät und den ersten VCR mittels des lokalen CDMA-basierten Netzwerkes gekoppelt ist;
Empfangen mit einem CDMA-Empfänger, bei der Steuerzentrale, von Signalen, die von dem ersten CDMA-Transceiver von dem ersten VCR zu der Steuerzentrale gesendet werden;
Senden, mit einem CDMA-Sender bei der Steuerzentrale, von Videosignalen an den ersten CDMA-Empfänger, der an das erste Fernsehgerät gekoppelt ist; und
Senden mit dem CDMA-Sender bei der Steuerzentrale, von Videosignalen an den ersten CDMA-Transceiver, der an den ersten VCR gekoppelt ist.

## Revendications

1. Système pour interconnecter une pluralité de dispositifs de divertissement à domicile en utilisant un réseau local en CDMA, dans lequel la pluralité de dispositifs de divertissement à domicile inclut un premier téléviseur, et un premier magnétoscope (VCR), comprenant :
un premier récepteur CDMA couplé au premier téléviseur ;
un premier émetteur-récepteur CDMA couplé au premier VCR ;
un central de commande incluant un accès d'entrée qui reçoit un signal de télévision à partir d'une source câble ou satellite, le central de commande étant couplé au premier téléviseur et au premier VCR par le réseau local en CDMA ;
dans lequel le central de commande inclut un récepteur CDMA qui reçoit les signaux émis par le premier émetteur-récepteur CDMA à partir du premier VCR vers le central de commande ; et
dans lequel le central de commande inclut un émetteur CDMA qui émet des signaux vidéo vers le premier récepteur CDMA couplé au premier téléviseur et des signaux vidéo vers le premier émetteur-récepteur CDMA couplé au premier VCR.

2. Système selon la revendication 1, comprenant en outre :
un deuxième récepteur CDMA couplé à un deuxième téléviseur ;
dans lequel le central de commande est couplé au deuxième téléviseur par le réseau local en CDMA et l'émetteur CDMA dans le central de commande émet des signaux vidéo vers le deuxième récepteur CDMA couplé au deuxième téléviseur.

3. Système selon la revendication 2, comprenant en outre :
un troisième récepteur CDMA couplé à un troisième téléviseur ;
dans lequel le central de commande est couplé au troisième téléviseur par le réseau local en CDMA et l'émetteur CDMA dans le central de commande émet des signaux vidéo vers le troisième récepteur CDMA couplé au troisième téléviseur.

4. Système selon la revendication 3, comprenant en outre :
un deuxième émetteur-récepteur CDMA couplé à un deuxième VCR ;
dans lequel le central de commande est couplé au deuxième VCR par le réseau local en CDMA, le récepteur CDMA dans le central de commande reçoit des signaux émis par le deuxième émetteur-récepteur CDMA à partir du deuxième VCR vers le central de commande, et l'émetteur CDMA dans le central de commande émet des signaux vidéo vers le deuxième émetteur-récepteur CDMA couplé au deuxième VCR.

5. Système selon la revendication 4, comprenant en outre :
un troisième émetteur-récepteur CDMA couplé à un troisième VCR ;
dans lequel le central de commande est couplé au troisième VCR par le réseau local en CDMA, le récepteur CDMA dans le central de commande reçoit des signaux émis par le troisième émetteur-récepteur CDMA à partir du troisième VCR vers le central de commande, et l'émetteur CDMA dans le central de commande émet des signaux vidéo vers le troisième émetteur-récepteur CDMA couplé au troisième VCR.

6. Système selon la revendication 5, dans lequel l'émetteur CDMA dans le central de commande émet des signaux vidéo à partir du central de commande vers le premier récepteur CDMA couplé au premier téléviseur sur un premier canal CDMA, l'émetteur CDMA dans le central de commande émet des signaux vidéo à partir du central de commande vers le deuxième récepteur CDMA couplé au deuxième téléviseur sur un deuxième canal CDMA, et l'émetteur CDMA dans le central de commande émet des signaux vidéo en provenance du central de commande vers le troisième récepteur CDMA couplé au troisième téléviseur sur un troisième canal CDMA.

7. Système selon la revendication 6, dans lequel l'émetteur CDMA dans le central de commande émet des signaux vidéo à partir du central de commande vers le premier émetteur-récepteur CDMA couplé au premier VCR sur un quatrième canal CDMA, l'émetteur CDMA dans le central de commande émet des signaux vidéo en provenance du central de commande vers le deuxième émetteur-récepteur CDMA couplé au deuxième VCR sur un cinquième canal CDMA, et l'émetteur CDMA dans le central de commande émet des signaux vidéo en provenance du central de commande vers le troisième émetteur-récepteur CDMA couplé au troisième VCR sur un sixième canal CDMA.

8. Système selon la revendication 7, dans lequel le premier émetteur-récepteur CDMA couplé au premier VCR émet des signaux vidéo vers le récepteur CDMA dans le central de commande sur un septième canal CDMA, le deuxième émetteur-récepteur CDMA couplé au deuxième VCR émet des signaux vidéo vers le récepteur CDMA du central de commande sur un huitième canal CDMA, et le troisième émetteur-récepteur CDMA couplé au troisième VCR émet les signaux vidéo vers le récepteur CDMA dans le central de commande sur un neuvième canal CDMA.

9. Système selon la revendication 8, comprenant en outre :
un quatrième émetteur-récepteur CDMA couplé au premier téléviseur, dans lequel le quatrième émetteur-récepteur CDMA inclut le premier récepteur CDMA couplé au premier téléviseur ;
un cinquième émetteur-récepteur CDMA couplé au deuxième téléviseur, dans lequel le cinquième émetteur-récepteur CDMA inclut le deuxième récepteur CDMA couplé au deuxième téléviseur ; et
un sixième émetteur-récepteur CDMA couplé au troisième téléviseur, dans lequel le sixième émetteur-récepteur CDMA inclut le troisième récepteur CDMA couplé au troisième téléviseur.

10. Système selon la revendication 9, dans lequel le quatrième émetteur-récepteur CDMA couplé au premier téléviseur émet des premiers signaux de commande vers le récepteur CDMA du central de commande sur un dixième canal CDMA, le cinquième émetteur-récepteur CDMA couplé au deuxième téléviseur émet des signaux de commande vers le récepteur CDMA dans le central de commande sur un onzième canal CDMA, et le sixième émetteur-récepteur CDMA couplé au troisième téléviseur émet des troisièmes signaux de commande vers le récepteur CDMA dans le central de commande sur un douzième canal CDMA.

11. Système selon la revendication 10, dans lequel les premiers signaux de commande représentent une sélection de canaux de télévision effectuée par l'utilisateur du premier téléviseur, les deuxièmes signaux de commande représentent une sélection de canaux de télévision effectuée par l'utilisateur du deuxième téléviseur, et les troisièmes signaux de commande représentent une sélection de canaux de télévision effectuée par un utilisateur du troisième téléviseur.

12. Système selon la revendication 11, dans lequel le central de commande comprend en outre :
un premier dispositif d'accord, agissant en réponse aux premiers signaux de commande, qui reçoit le signal de télévision en provenance de la source câble ou satellite et sélectionne à partir de là une unique station de télévision ;
un deuxième dispositif d'accord, agissant en réponse aux deuxièmes signaux de commande, qui reçoit le signal de télévision à partir de la source câble ou satellite et sélectionne à partir de là une unique station de télévision ;
un troisième dispositif d'accord, agissant en réponse aux troisièmes signaux de commande, qui reçoit le signal de télévision en provenance de la source câble ou satellite et sélectionne à partir de là une unique station de télévision ;
dans lequel, en réponse aux premiers signaux de commande, l'émetteur CDMA dans le central de commande émet des signaux vidéo représentatifs de la station de télévision sélectionnée par le premier dispositif d'accord vers le quatrième émetteur-récepteur CDMA couplé au premier téléviseur sur le premier canal CDMA ;
dans lequel, en réponse aux deuxièmes signaux de commande, l'émetteur CDMA dans le central de commande émet des signaux vidéo représentatifs de la station de télévision sélectionnée par le deuxième dispositif d'accord vers le cinquième émetteur-récepteur CDMA couplé au deuxième téléviseur sur le deuxième canal CDMA ; et
dans lequel, en réponse aux troisièmes signaux de commande, l'émetteur CDMA dans le central de commande émet des signaux vidéo représentatifs de la station de télévision sélectionnée par le troisième dispositif d'accord vers le sixième émetteur-récepteur CDMA couplé au troisième téléviseur sur le troisième canal CDMA.

13. Système selon la revendication 12, dans lequel le premier émetteur-récepteur CDMA couplé au premier VCR émet des quatrièmes signaux de commande vers le récepteur CDMA dans le central de commande sur un treizième canal CDMA, le deuxième émetteur-récepteur CDMA couplé au deuxième VCR émet des cinquièmes signaux de commande vers le récepteur CDMA dans le central de commande sur un quatorzième canal CDMA, et le troisième émetteur-récepteur CDMA couplé au troisième VCR émet des sixièmes signaux de commande vers le récepteur CDMA dans le central de commande sur un quinzième canal CDMA.

14. Système selon la revendication 13, dans lequel les quatrièmes signaux de commande représentent une sélection d'enregistrement de canaux de télévision effectuée par un utilisateur du premier VCR, les cinquièmes signaux de commande représentent une sélection d'enregistrement de canaux de télévision effectuée par un utilisateur du deuxième VCR, et les sixièmes signaux de commande représentent une sélection d'enregistrement de canaux de télévision effectuée par un utilisateur du troisième VCR.

15. Système selon la revendication 14, dans lequel :
le premier dispositif d'accord répond en outre aux quatrièmes signaux de commande ;
le deuxième dispositif d'accord répond en outre aux cinquièmes signaux de commande ;
le troisième dispositif d'accord répond en outre aux sixièmes signaux de commande ; et
dans lequel, en réponse aux quatrièmes signaux de commande, l'émetteur CDMA du central de commande émet des signaux vidéo représentatifs de la station de télévision sélectionnée par le premier dispositif d'accord vers le premier émetteur-récepteur CDMA couplé au premier VCR sur le quatrième canal CDMA ;
dans lequel, en réponse aux cinquièmes signaux de commande, l'émetteur CDMA du central de commande émet des signaux vidéo représentatifs de la station de télévision sélectionné par le deuxième dispositif d'accord vers le deuxième émetteur-récepteur CDMA couplé au deuxième VCR sur le cinquième canal CDMA ; et
dans lequel, en réponse aux sixièmes signaux de commande, l'émetteur CDMA du central de commande émet des signaux vidéo représentatifs de la station de télévision sélectionnée par le troisième dispositif d'accord vers le troisième émetteur-récepteur CDMA couplé au troisième VCR sur le sixième canal CDMA.

16. Système selon la revendication 15, comprenant en outre :
un septième émetteur-récepteur CDMA couplé à un ordinateur personnel ;
dans lequel le central de commande comprend en outre un accès d'entrée qui reçoit un signal Internet d'une source éloignée et transmet un signal Internet à la source éloignée ;
dans lequel le central de commande est couplé à l'ordinateur personnel par le réseau local en CDMA ; et
dans lequel le récepteur CDMA dans le central de commande reçoit des signaux Internet émis par le septième émetteur-récepteur CDMA à partir de l'ordinateur personnel vers le central de commande sur un seizième canal CDMA, et l'émetteur CDMA dans le central de commande émet des signaux Internet vers le septième émetteur-récepteur CDMA couplé à l'ordinateur personnel sur un dix septième canal CDMA.

17. Système selon la revendication 16, comprenant en outre :
un émetteur CDMA couplé à un dispositif d'accord audio ;
un émetteur CDMA couplé à un lecteur de disque compact ;
un récepteur CDMA couplé à un premier haut-parleur audio ; et
un récepteur CDMA couplé à un deuxième haut-parleur audio ;
dans lequel le central de commande est couplé au dispositif d'accord audio, au lecteur de disque compact, au premier haut-parleur et au deuxième haut-parleur par le réseau local en CDMA ;
dans lequel le récepteur CDMA dans le central de commande reçoit les signaux audio émis par le dispositif d'accord audio vers le central de commande sur un dix septième canal CDMA, le récepteur CDMA dans le central de commande reçoit des signaux audio émis à partir du lecteur de disque compact vers le central de commande sur un dix neuvième canal CDMA ; et
dans lequel l'émetteur CDMA dans le central de commande émet des signaux audio vers le premier haut-parleur sur un vingtième canal CDMA, et l'émetteur CDMA dans le central de commande émet les signaux audio vers le deuxième haut-parleur vers un vingt-et-unième canal CDMA.

18. Procédé d'interconnexion d'une pluralité de dispositifs de divertissement à domicile en utilisant un réseau local en CDMA, dans lequel la pluralité de dispositifs de divertissement à domicile inclut un premier téléviseur et un premier magnétoscope, VCR, comprenant les étapes suivantes :
prévoir un premier récepteur CDMA couplé à un premier téléviseur ;
prévoir un premier émetteur-récepteur CDMA couplé au premier VCR ;
prévoir un central de commande qui inclut un accès d'entrée qui reçoit un signal de télévision à partir d'une source câble ou satellite dans lequel le central de commande est couplé au premier téléviseur et au premier VCR par le réseau local en CDMA ;
recevoir, au moyen d'un récepteur CDMA au niveau du central de commande, les signaux émis par le premier émetteur-récepteur CDMA à partir du premier VCR vers le central de commande ;
émettre par un émetteur CDMA au niveau du central de commande des signaux vidéo vers le premier récepteur CDMA couplé au premier téléviseur ; et
émettre au moyen de l'émetteur CDMA au niveau du central de commande, des signaux vidéo vers le premier émetteur-récepteur CDMA couplé au premier VCR.
